# EUROPEAN PATENT SPECIFICATION

(11) **EP 3 043 082 B1**
(45) Date of publication and mention of the grant of the patent: **30.05.2018**
(21) Application number: 14843081.2
(22) Date of filing: 03.02.2014
(51) Int. Cl.: F16C 33/78, F16C 33/80, F16C 33/66, F16J 15/324, F16C 33/72

(54) **DUST SEAL**
STAUBDICHTUNG
JOINT ÉTANCHE À LA POUSSIÈRE

(30) Priority: 03.09.2013 JP 2013182140
(43) Date of publication of application: 13.07.2016
(73) Proprietor: NOK Corporation, Tokyo 105-8585 (JP)
(72) Inventor: TARUKAWA, Yuichi, Fukushima-shi Fukushima 960-1102 (JP)
(74) Representative: TBK
(86) International application number: PCT/JP2014/052399
(87) International publication number: WO 2015/033588

(56) References cited:
- WO-A1-2006/008898
- WO-A1-2006/008898
- DE-A1-102011 112 553
- JP-A- 2003 004 054
- JP-A- 2003 004 054
- JP-A- 2007 270 969
- JP-A- 2009 115 283
- JP-A- 2009 115 283
- JP-A- 2011 069 422
- JP-U- S6 077 818
- JP-U- S6 077 818
- US-A1- 2011 002 568

## Description

### BACKGROUND OF THE INVENTION

### Field of the Invention

The present invention relates to a dust seal according to the preamble of claim 1 utilizing a sealing technology. The dust seal according to the present invention is used, for example, in a hub bearing portion for a vehicle such as a motor vehicle, or is used in a bearing portion for the other general industrial devices.

### Description of the Conventional Art

As a countermeasure for achieving a long service life and improving a robustness of a hub bearing which is used in a severe environment in external foreign matters such as water, muddy water and dusts, there is a method of raising the level on the basis of a structure in which a dust seal 61 is set externally in an outer side of a seal 51 for hub bearing so as to reduce intrusion of the water, the muddy water and the dust into the hub bearing side, thereby leading to a long service life of the hub bearing, as shown in Fig. 7, which corresponds to the teaching of Patent Document 1.

In this case, since it is required to maintain low friction torque even if the dust seal 61 is added externally, the dust seal 61 externally attached is frequently employed to actuate actuated as a labyrinth seal with no interference.

On the other hand, in the light of a sealing performance, a dust seal 61 with an interference having a sliding lip 62 is advantageous as shown. However, there is a risk that a lip rubber portion deforms due to pressure fluctuation (generation of negative pressure) caused by temperature change within a bearing, a lip contact state is deteriorated, and a sliding torque is increased. More specifically, in a dust seal 61 which is installed to an outer side of a bearing portion of a device and inhibits dusts in an external portion A of the device from entering into a bearing side B in the device, the dust seal 61 having a seal lip 62 of a side lip structure which slidably comes into close contact with the other member 71, there is a risk that the lip 62 deforms due to generation of the negative pressure in the bearing side B in the machine, the lip 62 entirely abuts on the other member 71 and the sliding torque is increased.

A generic dust seal according to the preamble of claim 1 is shown by Patent Document 2. Further dust seals are shown by Patent Documents 3 to 5.

### PRIOR ART DOCUMENT

### Patent Document

Patent Document 1: WO 2006/008898 A1
Patent Document 2: US 2011/002568 A1
Patent Document 3: JP 2009 115283 A
Patent Document 4: JP 2003 004054 A
Patent Document 5: DE 10 2011 112553 A1

### SUMMARY OF THE INVENTION

### Problem to be Solved by the Invention

The present invention is made by taking the above points into consideration, and an object of the present invention is to provide a dust seal having an improved durability and efficiency. Advantageously, a dust seal is provided having a function of dissolving negative pressure when the negative pressure is generated in a bearing side in a device as well as achieving an excellent sealing performance at the steady operating time of the bearing portion, thereby allowing to inhibit sliding torque from being increased due to deterioration of a lip contact state, and further structured such that a rib provided on a surface of the lip for valve opening the lip stably comes into contact with the other member.

### Means for Solving the Problem

The object is solved by a dust seal having the combination of features of claim 1. Further advantageous developments of the invention are set out in the dependent claims.

In order to achieve the object mentioned above, a dust seal according to the present invention is a dust seal installed to an outer side of a bearing portion of a device and inhibiting dusts in an external portion of the device from entering into a bearing side in the device, the dust seal having a seal lip of a side lip structure which slidably comes into close contact with the other member, wherein a plurality of ribs are equally distributed on a surface in an inner side of the device of the seal lip, a lip leading end of the seal lip comes into close contact with the other member over a whole periphery at the steady operating time of the bearing portion, the lip leading end circumferentially opens valve partly around the rib serving as a supporting point of a lever due to deformation of the seal lip with negative pressure when the negative pressure is generated in the bearing portion, the lip leading end closes valve due to returning motion of the seal lip when the negative pressure is dissolved, and the rib is formed into a circular arc shape in a contact portion with the other member in a cross sectional shape when the rib is cut by a plane including a center axis of the dust seal, thereby widely coming into surface contact with the other member.

Further, a dust seal according to the present invention is the dust seal mentioned above, wherein a grease retention portion capable of storing a lubricating grease and formed into a concave shape is provided on a rising surface in the lip leading end side of the rib or a surface in the device inner side of the seal lip from the rising surface to the lip leading end.

Preferably, the dust seal is used in a hub bearing portion for a vehicle such as a motor vehicle, and is installed to an outer side of a seal for a hub bearing.

In the dust seal according to the present invention having the structure mentioned above, a plurality of ribs are equally distributed on the surface in the device inner side of the seal lip of the side lip structure. As a result, the dust seal operates as follows.

### (1) Steady operating time of bearing portion

At the steady operating time of the bearing portion, that is, when the negative pressure is not generated in the bearing portion, the lip leading end of the seal lip comes into close contact with the other member over a whole periphery. Therefore, an excellent sealing performance can be achieved.

### (2) Negative pressure generating time

When the negative pressure is generated in the bearing portion and reaches a predetermined value, the seal lip is deformed by the negative pressure, and the lip leading end circumferentially opens valve partly around the rib serving as the supporting point of the lever. As a result, since ambient air (atmospheric pressure) flows into from the valve opening position, the negative pressure state is dissolved.

### (3) After dissolving of negative pressure

When the negative pressure state is dissolved due to the inflow of the ambient air and goes beyond a predetermined value, the seal lip operates to return and the lip leading end closes valve. Therefore, since the dust seal returns to the state in the item (1) mentioned above, an excellent sealing performance can be achieved.

Further, in the present invention, since the shape of the rib is particularized, that is, the cross sectional shape of the contact portion with the other member in the rib is formed into the circular arc shape, the rib is formed into a shape that the rib widely comes into surface contact with the other member. Therefore, since the contact width of the rib with the other member is secured to be wider in comparison with the case that the rib comes into line contact with the other member, the rib is hard to be affected by a sliding surface shape, eccentricity, inclination and assembled condition of the other member, and a contact state of the rib with the other member is stabilized. Accordingly, there is set a condition that the operation and effect of dissolving the internal negative pressure (valve opening with the lip leading end) as mentioned above can be easily achieved.

The rib may be structured such as to always come into contact with the other member, or may be structured such as to be away from the other member at the steady operating time and come into contact with the other member only when the negative pressure is generated. In any case, since the rib slides against the other member, there is a risk that excessive wear is generated due to lack of lubrication. Then, in order to devise a countermeasure, it is preferable to supply the grease for lubrication to the contact portion with the other member in the rib. As a result, the grease retention portion capable of storing the lubricating grease and formed into the concave shape is provided on the rising surface in the lip leading end side of the rib or the surface in the device inner side of the seal lip from the rising surface to the lip leading end, and the grease is supplied to the contact portion from the grease retention portion. Therefore, since the grease is supplied to the contact portion with the other member in the rib according to the structure, it is possible to inhibit the excessive wear from being generated in the contact portion due to the lack of lubrication.

The dust seal according to the present invention is used, for example, in the hub bearing for the vehicle such as the motor vehicle, and is installed to the outer side of the seal for the hub bearing. Therefore, in the dust seal (the hub bearing externally attached dust seal) used in this kind of intended use, the operations and effects of the present invention can be obtained.

### Effect of the Invention

The present invention achieves the following effects.

More specifically, in the present invention, since the lip leading end of the seal lip comes into close contact with the other member over a whole periphery at the steady operating time of the bearing portion as mentioned above, it is possible to achieve the excellent sealing performance. Further, since the seal lip opens valve on the basis of the action of the lever by the rib when the negative pressure is generated in the bearing portion, it is possible to dissolve the negative pressure, and it is accordingly possible to inhibit the sliding torque from being increased due to the deterioration of the lip contact state.

Further, since the shape of the rib is particularized, that is, the cross sectional shape of the contact portion in the rib is formed into the circular arc shape so as to be formed into the shape that widely comes into surface contact with the other member, the contact state of the rib with the other member is stabilized. Therefore, the rib tends to operate as the supporting point of the lever, and the lip leading end tends to open valve.

Further, since the grease is supplied to the contact portion of the rib from the grease retention portion by the provision of the concave grease retention portion, it is possible to inhibit the excessive wear from being generated in the rib due to the lack of lubrication. Sufficient lubrication of the contact portion of the rib can contribute the torque reduction and the squeal resistance (suppression of sliding contact noise generation).

Further, in the case that the dust seal according to the present invention is used in the hub bearing portion for the vehicle such as the motor vehicle and is installed to the outer side of the seal for the hub bearing, the operations and effects of the present invention can be obtained in the dust seal (the hub bearing externally attached dust seal) which is used in this kind of intended use.

### BRIEF EXPLANATION OF THE DRAWINGS

Fig. 1 is a cross sectional view of a substantial part of a dust seal according to an example, which is useful for understanding the present invention;
Fig. 2 is an enlarged cross sectional view of the substantial part of the dust seal;
Fig. 3 is an enlarged cross sectional view of the substantial part and shows an operating state of the dust seal;
Fig. 4 is an explanatory view of a substantial part of a dust seal according to a first embodiment of the present invention;
Fig. 5 is an explanatory view of a substantial part of a dust seal according to an example, which is useful for understanding the present invention;
Fig. 6 is an explanatory view of a substantial part of a dust seal according to a second embodiment of the present invention; and
Fig. 7 is a cross sectional view of a substantial part and shows an installed state of a dust seal according to a prior art.

### DETAILED DESCRIPTION OF PREFERRED EMBODIMENTS

The following embodiments are included in the present invention.
(1) The present invention relates to an internal negative pressure dissolving function of the hub bearing externally attached dust seal.
(2) The side lip shaped hub bearing externally attached dust seal having the internal negative pressure dissolving rib. More specifically, the rib portion is formed into the side lip shape having the low torque, and the internal negative pressure dissolving ribs are circumferentially provided equally, thereby aiming at compatibility of the suppression of deterioration of the lip contact state caused by the internal negative pressure fluctuation (the negative pressure generation) and the torque reduction.
(3) Specifically, the lip leading end opens valve on the basis of the contact between the rib and the other sliding portion at the negative pressure generating time, and the deterioration of the lip contact state is suppressed by dissolving the internal negative pressure.
(4) The lip leading end opens valve only at the negative pressure generating time and returns to the contact with the rib after the negative pressure dissolving, by appropriately setting the shape and the equally distributed number of the ribs and the shape of the other sliding portion, so that it is possible to maintain the sealing performance.
(5) It is possible to reinforce the suppression of intrusion of the water, the muddy water and the dusts into the hub bearing by setting the externally attached dust seal to the dust seal with interference. Further, it is possible to achieve the compatibility of the sealing performance and the torque reduction by improving the robustness against the internal pressure fluctuation (the negative pressure generation). As a result, it is possible to expect contribution to the long service life and the torque reduction of the hub unit.
(6) The present invention targets at the side lip, and the rib comes into surface contact (the contact width of the rib is increased) by forming a position coming into contact with the other shaft in the rib provided in the inner peripheral surface of the side lip into an R-shaped form. As a result, the rib is hard to be affected by the shape of the other sliding portion, the eccentricity, the inclination and the assembled condition in comparison with the line contact, and the effect of dissolving the internal negative pressure (opening valve with the lip leading end) tends to be achieved.
(7) Further, since the grease retention portion is provided in an area which is formed between the internal negative pressure dissolving rib and the side lip in the present invention, the grease retained in the grease retention portion is exposed to the action of the centrifugal force, and acts on the side lip side in a direction of valve opening the lip leading end. The grease acts on the internal negative pressure dissolving rib side in a grease supplying direction, it is possible to prevent the internal negative pressure dissolving effect from being achieved due to poor lubrication → rib portion excessive wear, and it is possible to expect maintenance of the internal negative pressure dissolving effect over the long term. The rib specification can be considered to be excellent in the rib portion lubricating performance, the torque reduction and the squeal resistance in the light of provision of the grease retention effect in the area mentioned above.
(8) The excellent point of the present invention exists in a point that the ambient air can be passed through the portion in relation to the other sliding surface while retaining the grease in the grease retention portion which is formed between the internal negative pressure dissolving rib and the side lip.

### Example and Embodiments

Next, a description will be given of an example, which is useful for understanding the present invention, and of embodiments according to the present invention with reference to the accompanying drawings.

### Example

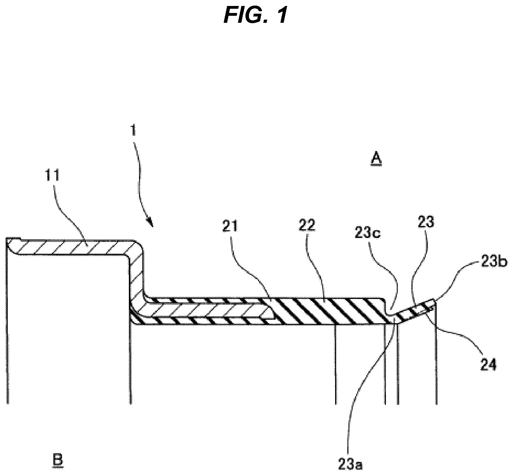

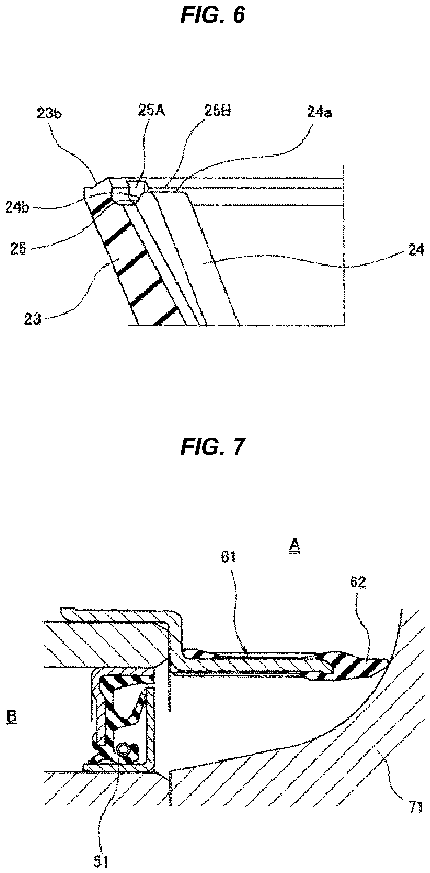

Fig. 1 shows a dust seal 1 according to the example. The dust seal according to the example is installed to an outer side of a bearing portion of a device, is structured such as to inhibit dusts in an external portion A of the device from entering into a bearing side B in the device, and has a seal lip 23 of a side lip structure which slidably comes into close contact with the other member. Further, the dust seal 1 according to the example is used in a hub bearing portion for a vehicle such as a motor vehicle and is installed to an outer side of a seal for a hub bearing, in the same manner as the prior art (Fig. 7) mentioned above.

The dust seal 1 is first of all provided as a whole with an attachment ring 11 made from metal which is fitted to an installation member such as a housing of a device or an outer race of a hub bearing portion, a rubber-like elastic body 21 is attached (vulcanization bonded) to the attachment ring 11, a cylindrical lip retention portion 22 is formed by the rubber-like elastic body 21, and a seal lip 23 having a side lip structure is integrally formed in a leading end of the lip retention portion 22.

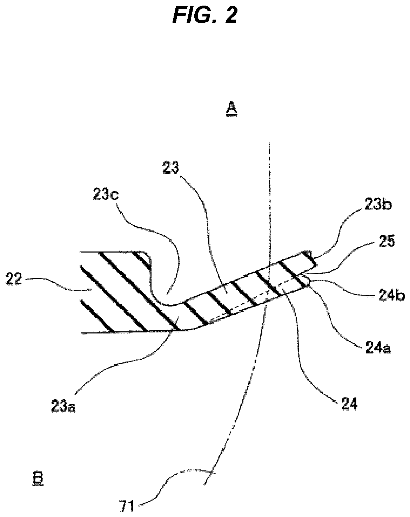

As shown in an enlarged manner in Fig. 2, the seal lip 23 is formed into a taper shape (a trumpet shape) so that a diameter is enlarged little by little from a lip base end 23a to a lip leading end 23b, and slidably comes into close contact with a surface (an end surface in an axial direction) of the other member 71 with an inner peripheral edge portion of the lip leading end 23b. Since a constricted portion 23c which is thinner in comparison with the lip retention portion 22 is provided on a surface in an outer side of the device (an outer peripheral surface) of the lip base end 23a, the seal lip 23 tends to be deformed, and tends to follow to a surface (a curved surface) of the other member 71.

Further, a plurality of ribs 24 are provided in an equally distributed manner (for example, six ribs 24 are circumferentially distributed equally) on a surface (an inner peripheral surface) in a device inner side of the seal lip 23, and the dust seal 1 operates as follows on the basis of the provision of the ribs 24 as mentioned above.

### (1) Steady operating time of bearing portion

At the steady operating time of the bearing portion, that is, when the negative pressure is not generated in the bearing side B in the device, the lip leading end 23b of the seal lip 23 comes into close contact with the other member 71 over a whole periphery. Therefore, an excellent sealing performance can be achieved so as to prevent the external foreign maters such as the water, the muddy water or the dusts in the external portion A of the device from entering into the bearing side B in the device.

### (2) Negative pressure generating time

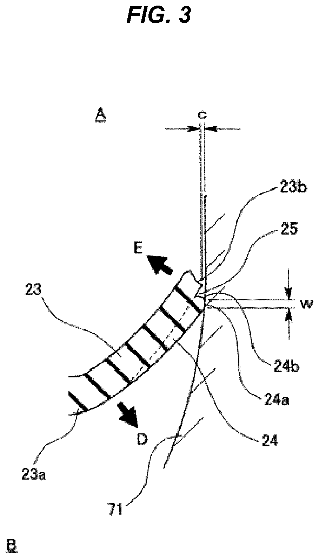

When the negative pressure is generated in the bearing side B in the device and reaches a predetermined value, the seal lip 23 is deformed with the negative pressure, and the lip leading end 23b circumferentially opens valve partly around the rib 24 serving as a supporting point of a lever. More specifically, when the negative pressure is generated in the bearing side B in the device and the negative pressure reaches the predetermined value as shown in Fig. 3, the seal lip 23 is deformed in a direction of an arrow D so as to be sucked by the negative pressure, the lip leading end 23b is lifted up in a direction of an arrow E circumferentially partly (at a position near the rib 24) around the lib 24 under a contact state with the other member 71, the rib 24 serving as the supporting point of the lever, and moves away from the other member 71, and a gap c is formed in relation to the other member 71. Therefore, since the ambient air (the atmospheric pressure) flows into the bearing side B in the device from the gap c, the negative pressure state of the bearing side B in the device is dissolved. Since the rib 24 comes into contact with the other member 71 at the ambient air flowing time, the ambient air flows into through both lateral sides (both sides in a circumferential direction) of the rib 24.

### (3) After dissolving of negative pressure

When the negative pressure state of the bearing side B in the device is dissolved due to the inflow of the ambient air and goes beyond a predetermined value, the seal lip 23 operates to return and the lip leading end 23b closes valve. Therefore, since the dust seal returns to the contact state over a whole peripheral described in the item (1) mentioned above, an excellent sealing performance can be achieved so as to prevent the external foreign matters such as the water, the muddy water or the dusts in the external portion A of the device from entering into the bearing side B in the device.

Therefore, according to the seal lip 23 with the rib having the structure mentioned above, the excellent sealing performance can be achieved, and the function of dissolving the negative pressure generated in the bearing side B in the device is provided. As a result, it is possible to inhibit the sliding torque from being increased due to the deterioration of the contact state of the seal lip 23 with the other member 71.

The rib 24 is structured as follows in detail.

More specifically, the rib 24 is formed so that its height becomes higher little by little from the lip base end 23a side to the lip leading end 23b side, as shown in Fig. 2. Further, the rib 24 is formed so that a lateral width (a width in a circumferential direction) is approximately constant.

Further, the rib 24 is formed so that a contact portion 24a with the other member 71 is a circular arc shape in a cross sectional shape when the rib 24 is cut by a plane including a center axis of the dust seal 1, whereby the rib 24 can widely come into surface contact with the other member with a predetermined contact width w as shown in Fig. 3. In other words, since the rib 24 is formed so that its height becomes higher little by little from the lip base end 23a side to the lip leading end 23b side as mentioned above, the cross sectional shape of the rib is formed into an approximately triangular shape, however, an apex portion of the triangle constructing the contact portion 24a is not formed into a peak shape but is formed into a circular arc cross sectional shape. As a result, the rib can widely come into surface contact with the other member 71 with the predetermined contact width w.

Further, a grease retention portion 25 capable of storing a lubricating grease such as a bearing grease and formed into a concave shape is provided in a rising surface 24b in the lip leading end 23b side of the rib 24, and it is possible to supply the grease for lubricating from the grease retention portion 25 to the contact portion 24a.

The concave grease retention portion 25 may be provided on a surface (an inner peripheral surface) in the device inner side of the seal lip 23 from the rising surface 24b of the rib 24 to the lip leading end 23b as follows, in addition to the provision in the rising surface 24b in the lip leading end 23b side of the rib 24.

### First Embodiment

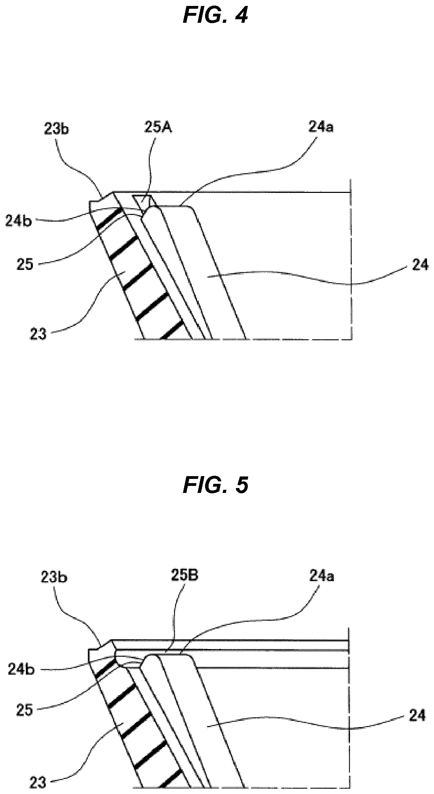

In a first embodiment shown in Fig. 4, a grease retention portion 25A formed into a concave shape is provided as a circumferential part on a surface (an inner peripheral surface) in the device inner side of the seal lip 23 from the rising surface 24b of the rib 24 to the lip leading end 23b, so as to be aligned with the rib 24 at a circumferential position.

### Example

In an example shown in Fig. 5, a grease retention portion 25B formed into a concave shape is provided as an annular shaped part on a surface (an inner peripheral surface) in the device inner side of the seal lip 23 from the rising surface 24b of the rib 24 to the lip leading end 23b.

### Second Embodiment

In a second embodiment shown in Fig. 6, a grease retention portion 25A formed into a concave shape is provided as a circumferential part on a surface (an inner peripheral surface) in the device inner side of the seal lip 23 from the rising surface 24b of the rib 24 to the lip leading end 23b, so as to be aligned with the rib 24 at a circumferential position, and an annular grease retention portion 25B is additionally provided. With regard to the depth of the concavities, the circumferentially partial grease retention portion 25A is set to be deeper, and the grease collected by the annular grease retention portion 25B is supplied from the circumferentially partial grease retention portion 25A to the contact portion 24a.

Further, micro concavities and convexities (satin finished surfaces or surface roughness) may be provided at least on the grease retention surface, thereby making the grease to be easily retained.

### Description of Reference Numerals

1 dust seal
11 attachment ring
21 rubber-like elastic body
22 lip retention portion
23 seal lip
23a lip base end
23b lip leading end
23c constricted portion
24 rib
24a contact portion
24b rising surface
25, 25A, 25B grease retention portion
71 other member

## Claims

1. A dust seal (1) installable to an outer side of a bearing portion of a device and configured to inhibit dusts in an external portion (A) of the device from entering into a bearing side (B) in the device, the dust seal (1) having a seal lip (23) of a side lip structure which is configured to slidably come into close contact with an other member (71), wherein a plurality of ribs (24) is distributed on a surface in the bearing side (B) of the device of said seal lip (23), wherein a lip leading end (23b) of said seal lip (23) is configured to come into close contact with said other member (71) over a whole periphery at the steady operating time of said bearing portion, said lip leading end (23b) is configured to circumferentially open valve partly around said rib (24) serving as a supporting point of a lever due to deformation of said seal lip (23) with negative pressure when the negative pressure is generated in said bearing portion, and said lip leading end (23b) is configured to close valve due to returning motion of said seal lip (23) when said negative pressure is dissolved, and
wherein said rib (24) is formed into a circular arc shape in a contact portion (24a) with said other member (71) in a cross sectional shape when said rib (24) is cut by a plane including a center axis of said dust seal (1), thereby widely coming into surface contact with said other member (71), **characterized in that**
said plurality of ribs (24) is equally distributed on the surface in the bearing side (B) of the device of said seal lip (23), and **in that** a grease retention portion (25) capable of storing a lubricating grease and formed into a concave shape is provided on a rising surface (24b) in the lip leading end (23b) side of said rib (24) or a surface in the bearing side (B) of the device of said seal lip (23) from said rising surface (24b) to said lip leading end (23b), wherein said grease retention portion (25A) formed into the concave shape is provided as a circumferential part on a surface in the bearing side (B) of the device of said seal lip (23) from the rising surface (24b) of said rib (24) to said lip leading end (23b) and as being aligned with said rib (24) at a circumferential position.

2. The dust seal (1) according to claim 1, wherein a grease retention portion (25B) formed into the concave shape is provided as an annular shaped part on a surface in the bearing side (B) of the device of said seal lip (23) from the rising surface (24b) of said rib (24) to said lip leading end (23b).

3. The dust seal (1) according to claim 1, wherein an annular grease retention portion (25B) is additionally provided.

4. The dust seal (1) according to any one of claims 1 to 3, wherein said dust seal (1) is used in a hub bearing portion for a vehicle such as a motor vehicle, and is installable to an outer side of a seal for a hub bearing.

## Patentansprüche

1. Staubdichtung (1), die an einer äußeren Seite eines Lagerabschnitts einer Vorrichtung installierbar und eingerichtet ist, Stäube in einem Außenabschnitt (A) der Vorrichtung daran zu hindern, in eine Lagerseite (B) in der Vorrichtung einzudringen, wobei die Staubdichtung (1) eine Dichtungslippe (23) einer Seitenlippenstruktur hat, die eingerichtet ist, mit einem anderen Element (71) in engen Kontakt zu kommen,
wobei eine Vielzahl von Rippen (24) auf einer Fläche auf der Lagerseite (B) der Vorrichtung der Dichtungslippe (23) verteilt ist,
wobei ein Lippenvorderende (23b) der Dichtungslippe (23) eingerichtet ist, in engen Kontakt mit dem anderen Element (71) über einen gesamten Umfang in der stationären Betriebszeit des Lagerabschnitts zu kommen, wobei das Lippenvorderende (23b) eingerichtet ist, ein Absperrorgan teilweise um die Rippe (24) umlaufend zu öffnen, die als ein Auflagepunkt eines Hebels dient, aufgrund einer Verformung der Dichtungslippe (23) mit einem Unterdruck, wenn der Unterdruck in dem Lagerabschnitt erzeugt wird, und wobei das Lippenvorderende (23b) eingerichtet ist, ein Absperrorgan zu schließen, aufgrund einer Rückkehrbewegung der Dichtungslippe (23), wenn der Unterdruck aufgelöst ist, und
wobei die Rippe (24) in einer kreisförmigen Bogenform in einem Kontaktabschnitt (24a) mit dem anderen Element (71) in einer Querschnittsform ausgebildet ist, wenn die Rippe (24) durch eine Ebene geschnitten ist, die eine Mittelachse der Staubdichtung (1) umfasst, wobei sie dadurch weithin in einen Flächenkontakt mit dem anderen Element (71) kommt, **dadurch gekennzeichnet, dass**
die Vielzahl von Rippen (24) auf der Fläche auf der Lagerseite (B) der Vorrichtung der Dichtungslippe (23) gleichmäßig verteilt ist, und dass
ein Fettrückhalteabschnitt (25), der imstande ist, ein Schmierfett aufzunehmen und in einer konkaven Form ausgebildet ist, auf einer ansteigenden Fläche (24b) auf der Seite des Lippenvorderendes (23b) der Rippe (24) oder einer Fläche auf der Lagerseite (B) der Vorrichtung der Dichtungslippe (23) von der ansteigenden Fläche (24b) zu dem Lippenvorderende (23b) vorgesehen ist, wobei der Fettrückhalteabschnitt (25A), der in der konkaven Form ausgebildet ist, als ein Umfangsabschnitt auf einer Fläche auf der Lagerseite (B) der Vorrichtung der Dichtungslippe (23) von der ansteigenden Fläche (24b) der Rippe (24) zu dem Lippenvorderende (23b) vorgesehen ist und mit der Rippe (24) an einer Umfangsposition fluchtend ist.

2. Staubdichtung (1) nach Anspruch 1, wobei ein Fettrückhalteabschnitt (25B), der in der konkaven Form ausgebildet ist, als ein ringförmig geformter Abschnitt auf einer Fläche auf der Lagerseite (B) der Vorrichtung der Dichtungslippe (23) von der ansteigenden Fläche (24b) der Rippe (24) zu dem Lippenvorderende (23b) vorgesehen ist.

3. Staubdichtung (1) nach Anspruch 1, wobei ein ringförmiger Fettrückhalteabschnitt (25B) zusätzlich vorgesehen ist.

4. Staubdichtung (1) nach einem der Ansprüche 1 bis 3, wobei die Staubdichtung (1) in einem Nabenlagerabschnitt für ein Fahrzeug, wie etwa ein Kraftfahrzeug, verwendet wird und an einer äußeren Seite einer Dichtung für ein Nabenlager installierbar ist.

## Revendications

1. Joint étanche à la poussière (1) pouvant être installé sur un côté externe d'une partie de palier d'un dispositif et configuré pour empêcher la poussière dans une partie externe (A) du dispositif d'entrer dans un côté de palier (B) dans le dispositif, le joint étanche à la poussière (1) ayant une lèvre de joint d'étanchéité (23) d'une structure de lèvre latérale qui est configurée pour venir, de manière coulissante, en contact immédiat avec un autre élément (71),
dans lequel une pluralité de nervures (24) est répartie sur une surface dans le côté de palier (B) du dispositif de ladite lèvre de joint d'étanchéité (23),
dans lequel une extrémité d'attaque de lèvre (23b) de ladite lèvre de joint d'étanchéité (23) est configurée pour venir en contact immédiat avec ledit autre élément (71) sur toute une périphérie au moment du fonctionnement stable de ladite partie de palier, ladite extrémité d'attaque de lèvre (23b) est configurée pour ouvrir, de manière circonférentielle, la valve partiellement autour de ladite nervure (24) servant de point de support d'un levier en raison de la déformation de ladite lèvre de joint d'étanchéité (23) avec la pression négative, lorsque la pression négative est générée dans ladite partie de palier, et ladite extrémité d'attaque de lèvre (23b) est configurée pour fermer la valve en raison du mouvement de retour de ladite lèvre de joint d'étanchéité (23) lorsque ladite pression négative est dissoute, et
dans lequel ladite nervure (24) est formée selon une forme d'arc circulaire dans une partie de contact (24a) avec ledit autre élément (71) dans une forme transversale lorsque ladite nervure (24) est coupée par un plan comprenant un axe central dudit joint étanche à la poussière (1), venant ainsi largement en contact de surface avec ledit autre élément (71), **caractérisé en ce que** :
ladite pluralité de nervures (24) est répartie de manière égale sur la surface dans le côté de palier (B) du dispositif de ladite lèvre de joint d'étanchéité (23), et **en ce que** :
une partie de retenue de graisse (25) capable de stocker une graisse de lubrification et formée selon une forme concave est prévue sur une surface montante (24b) du côté de l'extrémité d'attaque de lèvre (23b) de ladite nervure (24) ou une surface dans le côté de palier (B) du dispositif de ladite lèvre de joint d'étanchéité (23) à partir de ladite surface montante (24b) jusqu'à ladite extrémité d'attaque de lèvre (23b), dans lequel ladite partie de retenue de graisse (25A) formée selon la forme concave est prévue sous la forme d'une partie circonférentielle sur une surface dans le côté de palier (B) du dispositif de ladite lèvre de joint d'étanchéité (23) à partir de la surface montante (24b) de ladite nervure (24) jusqu'à ladite extrémité d'attaque de lèvre (23b) et comme étant alignée avec ladite nervure (24) dans une position circonférentielle.

2. Joint étanche à la poussière (1) selon la revendication 1, dans lequel une partie de retenue de graisse (25B) formée selon la forme concave est prévue sous la forme d'une partie de forme annulaire sur une surface dans le côté de palier (B) du dispositif de ladite lèvre de joint d'étanchéité (23) à partir de la surface montante (24b) de ladite nervure (24) jusqu'à ladite extrémité d'attaque de lèvre (23b).

3. Joint étanche à la poussière (1) selon la revendication 1, dans lequel on prévoit, de plus, une partie de retenue de graisse annulaire (25B).

4. Joint étanche à la poussière (1) selon l'une quelconque des revendications 1 à 3, dans lequel ledit joint étanche à la poussière (1) est utilisé dans une partie de palier de moyeu pour un véhicule tel qu'un véhicule à moteur, et peut être installé sur un côté externe pour un palier de moyeu.
